# FASCICULE DE BREVET EUROPEEN

(11) **EP 0 885 682 B1**
(45) Date de publication et mention de la délivrance du brevet: **28.08.2002**
(21) Numéro de dépôt: 98401241.9
(22) Date de dépôt: 25.05.1998
(51) Int. Cl.: B23K 3/02

(54) **Fer à souder de couvreur à flamme optimisée**
Lötkolben für Dacharbeiten, mit optimisierter Flamme
Soldering iron for roofworker with optimized burner

(30) Priorité: 11.06.1997 FR 9707245
(43) Date de publication de la demande: 23.12.1998
(73) Titulaire: GUILBERT EXPRESS S.A., F-75011 Paris (FR)
(72) Inventeur: Le Marchand, Alain, 95270 Asnieres sur Oise (FR); Guillou, Yves, 77500 Chelles (FR)
(74) Mandataire: Rousset, Jean-Claude

(56) Documents cités:
- FR-A- 2 312 326
- FR-A- 2 583 324

## Description

L'invention concerne les fers à souder conformément au préambule de la revendication 1 (voir FR-A-2 312 326 par exemple), notamment du type dit de couvreur, fonctionnant par combustion de gaz et comprenant un corps de chauffe, et une panne comportant une queue de panne orientée selon un axe à l'intérieur du corps de chauffe.

Dans les fers à souder de ce genre, un brûleur réalise un mélange de gaz combustible et d'air primaire et forme dans le corps de chauffe une flamme qui échauffe la queue de panne. La chaleur est transmise par conduction de la queue à la partie active de la panne qui prolonge celle-ci vers le bas à l'extérieur du corps de chauffe et est amenée en contact avec les pièces à travailler, notamment à souder.

FR-A-2 312 326, considéré comme étant l'état de la technique le plus proche, décrit un fer de couvreur dans lequel le brûleur entoure l'axe de la queue de panne de manière à produire dans le corps de chauffe une flamme convergeant vers celle-ci.

Dans ce fer connu, la flamme convergente se forme dans une zone de flamme continue qui s'étend sur la totalité ou sur la majeure partie de la périphérie de la queue de panne.

Le but de l'invention est d'améliorer l'échange de chaleur entre la flamme et la queue de panne.

À cet effet, un premier aspect de l'invention prévoit que le brûleur est disposé de manière à former la flamme dans au moins deux zones de l'espace annulaire compris entre la queue de panne et le brûleur, séparées dans la direction circonférentielle par au moins deux zones sans flamme.

On a découvert que la disposition selon l'invention permet d'une part un cheminement de la flamme le long de la queue de panne dans des premières régions de la surface de celle-ci, d'autre part un accès d'air secondaire et une circulation de celui-ci dans des secondes régions de la surface, les premières et secondes régions étant disposées de manière alternée autour de l'axe de la queue de panne. Ainsi, la flamme est correctement alimentée en air secondaire au voisinage de chaque élément de surface de la queue de panne, ce qui assure un échange de chaleur optimal.

Des caractéristiques optionnelles de l'invention, complémentaires ou alternatives, sont énoncées ci-après:
- Le brûleur est propre à produire une flamme à dards multiples et comprend une grille entourant la queue de panne, ladite grille présentant, en regard de chaque zone de flamme, une multiplicité de trous formant chacun un dard, et étant exempte de trous en regard des zones sans flamme.
- Le brûleur est propre à produire des dards dont le point le plus chaud se situe sensiblement à la surface de la queue de panne.
- Des trajets pour le cheminement de la flamme le long de la queue de panne dans sa direction axiale sont définis par des rainures longitudinales ménagées dans la queue de panne et réparties sur la périphérie de celle-ci et/ou par des évidements du corps de chauffe.
- Lesdits trajets s'étendent vers le haut et vers le bas à partir d'une portion médiane de la longueur axiale de la queue de panne vers laquelle la flamme converge depuis le brûleur.
- Lesdites rainures débouchent vers le bas à l'extérieur du corps de chauffe et s'étendent vers le haut jusqu'au sommet de la queue de panne.
- Ledit espace annulaire communique avec l'extérieur du corps de chauffe, vers le bas par un intervalle annulaire délimité par la périphérie de la panne et par le bord d'une ouverture inférieure du corps de chauffe traversée par celle-ci, et vers le haut par au moins un passage ménagé sensiblement en regard de l'extrémité supérieure de la queue de panne.
- La section dudit espace annulaire perpendiculairement à l'axe est 3 à 4 fois supérieure à la section dudit intervalle annulaire et 2 à 3 fois supérieure à la surface desdits passages.
- Ledit bord de l'ouverture inférieure est sensiblement cylindrique et se raccorde à un épaulement interne sur lequel s'appuie la panne.
- Le brûleur est disposé autour de la queue de panne symétriquement par rapport à un plan orienté selon la direction longitudinale du fer et contenant ledit axe.
- Le brûleur définit deux zones de flamme symétriques l'une de l'autre par rapport audit plan et séparées l'une de l'autre par deux zones sans flamme disposées respectivement en avant et en arrière de la queue de panne.
- Deux passages de sortie de flamme sont ménagés à la partie supérieure du corps de chauffe, sensiblement en regard des deux zones de flamme respectivement dans la direction axiale de la queue de panne.
- Le fer comprend en outre un pied de repos comportant une région médiane définissant une ligne d'appui sur une surface de support horizontale, reliée par des bras respectifs à des régions d'extrémités qui sont articulées sur une partie fixe du fer selon des axes respectifs sensiblement parallèles à ladite ligne d'appui, lesdites régions d'extrémités étant, à l'état non monté, à une distance mutuelle inférieure à la distance entre lesdits axes d'articulation de telle sorte que le pied peut être amené, par déformation élastique, soit dans une position d'appui, soit dans une position d'effacement, ces deux positions étant situées respectivement de part et d'autre du plan contenant les deux axes d'articulation.
- Le pied de repos est formé par un fil métallique coudé.
- La panne peut être montée sur le corps de chauffe dans des positions différant par l'angle entre l'axe de la queue de panne et la direction longitudinale du fer.
- La panne s'appuie par une portion de surface sphérique sur le bord d'une ouverture inférieure du corps de chauffe qu'elle traverse, grâce à une vis de serrage s'étendant selon l'axe de la queue de panne et traversant une ouverture supérieure du corps de chauffe.
- Ladite ouverture supérieure est d'une largeur juste suffisante pour recevoir la tige de la vis et d'une longueur plus grande dans la direction avant-arrière de manière à permettre un pivotement de l'axe de la queue de panne dans un plan orienté avant-arrière.
- La masse de la queue de panne représente moins de 30 % de la masse de la partie active de la panne.

Les caractéristiques et avantages de l'invention seront exposés plus en détail dans la description ci-après, en se référant aux dessins annexés, sur lesquels:
- la figure 1 est une vue en coupe longitudinale de la partie avant d'un fer à souder de couvreur selon l'invention;
- la figure 2 est une vue partielle en coupe selon la ligne II-II de la figure 1;
- la figure 3 est une vue du pied de repos à l'état non monté;
- la figure 4 est une vue de dessus du fer;
- la figure 5 représente la grille du brûleur avant enroulement; et
- la figure 6 représente différentes sections de passage des gaz.

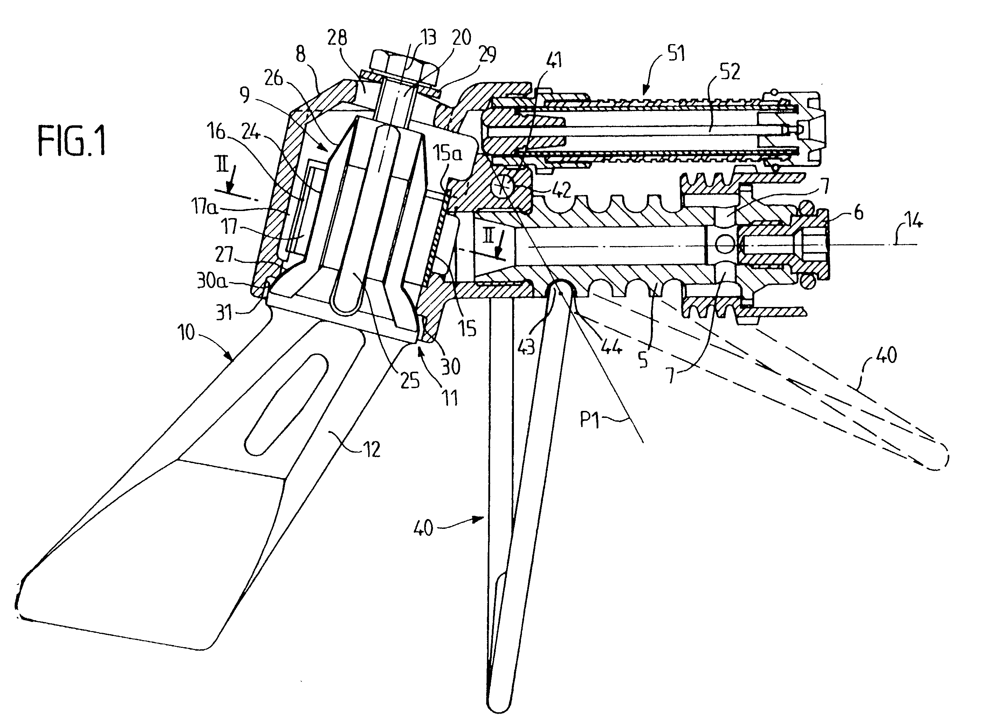

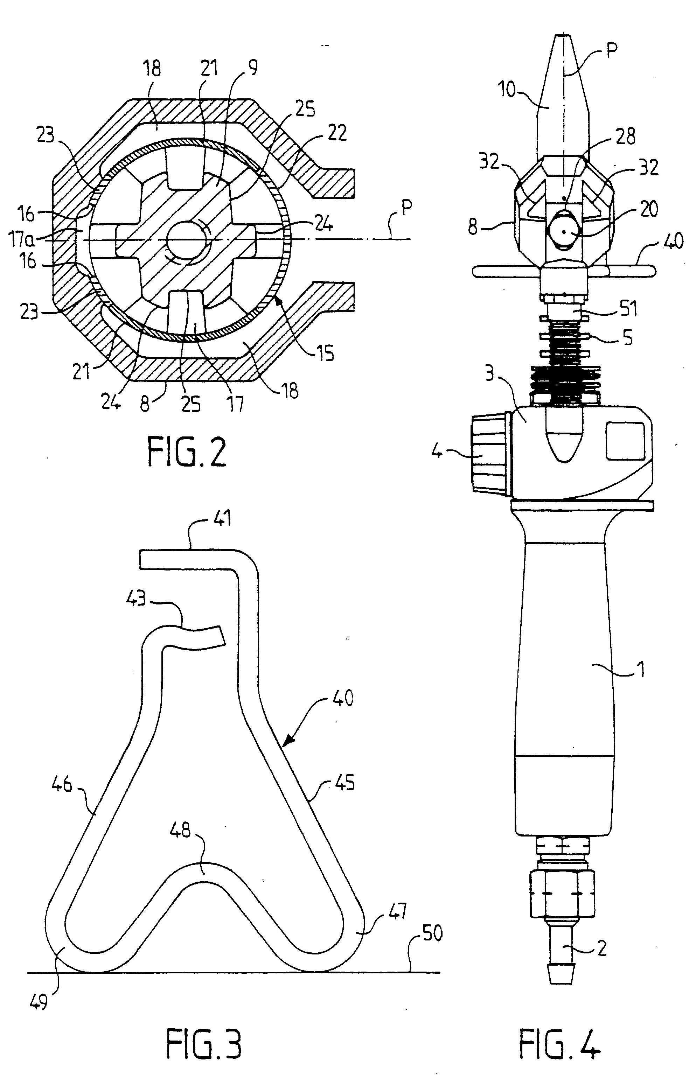

Le fer selon l'invention comprend de façon classique, comme montré sur la figure 4, une poignée allongée 1 portant à son extrémité arrière un embout 2 d'arrivée de gaz combustible. À l'extrémité avant de la poignée 1 est disposé un boîtier de commande 3 contenant un robinet non représenté d'alimentation en gaz qui peut être manoeuvré par un bouton rotatif latéral 4. Un tube mélangeur 5 disposé en avant du boîtier 3, dans le prolongement de la poignée 1, reçoit axialement un jet de gaz formé par un injecteur 6 (figure 1) monté entre le boîtier 3 et le tube 5. Ce jet de gaz se mélange à de l'air primaire qui est admis à l'intérieur du tube par des ouvertures radiales 7 traversant la paroi de celui-ci, immédiatement en avant de l'injecteur 6. Le tube de mélange 5 se raccorde à son extrémité avant à un corps de chauffe 8 constitué par une pièce métallique creuse, dans laquelle est logée la queue 9 d'une panne 10 qui traverse une ouverture inférieure 11 du corps. La partie active 12 de la panne, qui fait saillie vers le bas au-delà de l'ouverture 11, est destinée à venir en contact avec des pièces à travailler, notamment à souder. La queue de panne 9 est orientée selon un axe 13 qui est légèrement incliné vers l'avant et vers le bas lorsque l'axe 14 du tube 5 et de l'injecteur 6 est horizontal.

Sur une portion médiane de sa hauteur axiale, la queue de panne est entourée par une bande de tôle 15 logée dans le corps de chauffe, incurvée en cylindre autour de l'axe 13. La bande 15 est enroulée sur la quasi-totalité d'un tour, ses extrémités 16 (figure 2) étant situées en regard l'une de l'autre du côté avant du corps de chauffe. La bande 15 est maintenue à ses bords supérieur et inférieur par la paroi du corps 8 et coopère avec celle-ci pour délimiter un espace annulaire 17 entourant la queue de panne. Elle présente à mi-longueur de son bord supérieur une languette 15a servant à son immobilisation en rotation. La paroi du corps 8 est évidée sur ses côtés latéraux et à l'arrière, radialement en regard de la bande 15, pour former un espace libre 18 séparé de l'espace 17 par l'épaisseur de la bande et communiquant avec l'extrémité avant du tube de mélange 5. Elle est également évidée à l'avant, entre les extrémités 16, pour former une extension radiale 17a de l'espace 17. Le corps de chauffe 8, la panne 10 et la bande 15 sont symétriques par rapport au plan P contenant les axes 13 et 14.

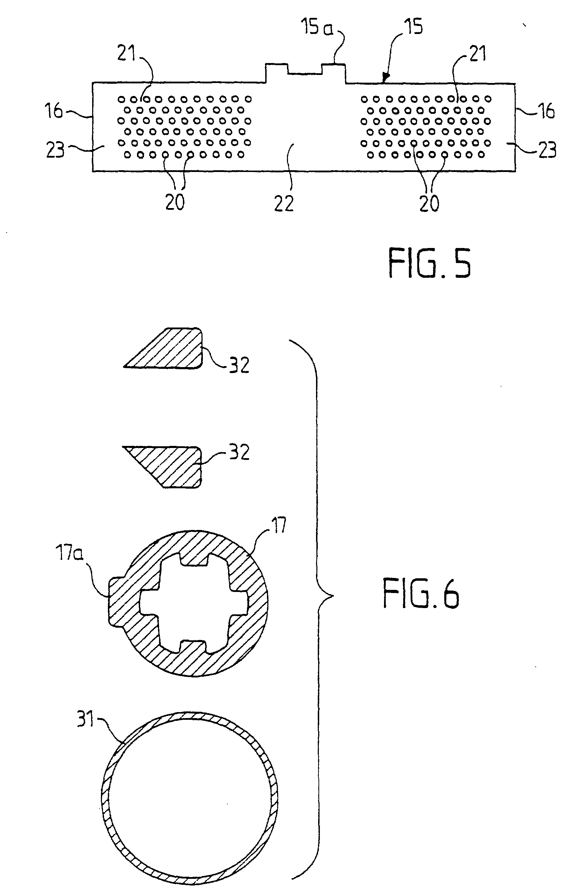

La bande 15 est traversée par une multitude de trous 20 (figure 5) lui donnant la configuration d'une grille. Selon l'invention, ces trous sont localisés dans deux régions 21 de la longueur circonférentielle de la grille 15, qui sont symétriques l'une de l'autre par rapport au plan P et sensiblement diamétralement opposées par rapport à l'axe 13. Les deux régions 21 sont séparées l'une de l'autre par une région médiane 22 non perforée, tournée vers le tube de mélange 5. Chacune des régions 21 et 22 s'étend approximativement sur un quart de tour. Les régions d'extrémités 23 situées entre les régions perforées 21 et les extrémités 16 de la grille sont également pleines.

Radialement en regard de la grille 15, la queue de panne 9 présente une surface extérieure cylindrique de révolution 24 à partir de laquelle sont ménagées des rainures longitudinales 25, dans l'exemple illustré trois rainures de chaque côté du plan P. À sa partie supérieure, la queue de panne se rétrécit progressivement selon une surface tronconique 26. À sa partie inférieure, elle s'évase selon une surface sphérique convexe 27 de telle sorte que, lorsqu'une vis 20, traversant une ouverture supérieure 28 du corps de chauffe, se visse dans un trou axial taraudé de la queue de panne, la tête de la vis, par l'intermédiaire d'une rondelle 29, et la surface sphérique 27 s'appuient respectivement sur la paroi supérieure du corps de chauffe et sur un épaulement 30 se raccordant au bord cylindrique 30a de l'ouverture inférieure 11 de celui-ci pour assurer l'immobilisation de la panne par rapport au corps de chauffe. Les rainures 25 s'étendent vers le haut jusqu'à l'extrémité supérieure de la queue de panne, et vers le bas jusqu'au-delà de l'épaulement 11 de manière à assurer une communication entre l'espace annulaire 17 et l'atmosphère extérieure par l'intermédiaire de l'ouverture 11.

Le mélange gazeux provenant du tube de mélange 5 frappe la région médiane non perforée 22 de la grille 15 et est dévié latéralement dans l'espace 18, de part et d'autre du plan P, jusqu'en regard des régions perforées 21, dont les trous 20 constituent le seul passage de communication entre les espaces 18 et 17. La flamme est formée de dards multiples issus chacun de l'un des trous 20 et dirigés radialement vers la queue de panne. La surface du front de flamme, c'est-à-dire de la section transversale de l'ensemble des dards, correspond à la surface des régions perforées de la grille, et est environ trois fois supérieure à celle d'un front de flamme à dard unique usuel dans les fers de couvreur. Par ailleurs la section des trous 20 peut être choisie, en fonction de la pression du gaz, de telle sorte que le point le plus chaud des dards, sensiblement à l'extrémité de ceux-ci, se situe sur la surface moyenne de la queue de panne compte tenu des rainures 25, au lieu d'être sur l'axe de la queue de panne lorsqu'on souhaite obtenir un certain étalement d'un dard unique autour de celle-ci. Ces deux particularités améliorent la transmission de chaleur à la queue de panne et entraînent une augmentation du rendement du fer.

Au contact de la queue de panne, les dards poursuivent leur cheminement le long de celle-ci, axialement vers le bas et vers le haut. Les gaz brûlés sont évacués vers le bas par l'ouverture 11 du corps de chauffe, que traversent les rainures 25, et vers le haut par deux ouvertures latérales 32 situées de part et d'autre de l'ouverture médiane 28, symétriquement l'une de l'autre par rapport au plan P, en avant de l'axe 13 de la queue de panne. Cet emplacement permet d'éloigner les flammes débordantes de l'utilisateur. Le profil particulier de l'ouverture 11, présentant un épaulement radial 30 suivi d'un bord cylindrique 30a au débouché vers l'extérieur, rabat les flammes débordantes vers la panne et améliore donc la collecte de chaleur par celle-ci. Du fait que la flamme n'atteint la queue de panne que sur une partie de son périmètre, de l'air secondaire, pénétrant principalement par l'ouverture 11, le long des rainures 25, peut balayer la surface de la queue de panne sur le reste de son périmètre pour alimenter la flamme à la surface de la queue de panne, c'est-à-dire à l'endroit même où une transmission de chaleur est souhaitée. La répartition géométrique de la flamme et du flux d'air secondaire a également pour effet de permettre une entrée d'air secondaire et une sortie de gaz brûlés simultanées et non plus alternées, ou au moins une augmentation sensible de la fréquence du cycle entrée/sortie, ce qui améliore encore le rendement et diminue considérablement le bruit de fonctionnement du fer à souder, étant précisé que l'amélioration du rendement conduit lui-même à une réduction du bruit grâce une réduction du débit de gaz, ici de l'ordre de 40 %. Les rainures 25 et l'espace 17a contribuent à canaliser axialement le cheminement des dards de la flamme et la circulation de l'air secondaire. L'augmentation du rendement et la diminution du débit permettent en outre de réduire le volume de la chambre de combustion 17-17a et par conséquent la hauteur et la masse de la queue de panne, cette dernière ne représentant plus que 25 % de la masse de la partie active de la panne, au lieu de 50 % environ dans les fers connus.

Un élément important pour l'optimisation des flux gazeux est constitué par les relations entre la section transversale S1 de l'espace annulaire 17-17a, celle S2 de l'intervalle annulaire 31 entre le bord 30a de l'ouverture 11 et la surface de la panne, et la surface S3 des passages 32, qui sont représentées hachurées sur la figure 6. Dans l'exemple illustré, on a choisi les valeurs S1 = 273,5 mm², S2 = 82,9 mm² et S3 = 116 mm², ce qui donne des rapports S1/S2 ≈ 3,3 et S1/S3 ≈ 2,4. Il est avantageux que ces rapports soient compris entre 3 et 4 et entre 2 et 3 respectivement.

Le fer à souder illustré possède un pied 40 permettant de le faire reposer sur une surface horizontale, entre deux utilisations ou pendant son refroidissement, de manière que la panne 10 ne vienne pas en contact avec la surface de support. Le pied 40 est constitué par un fil métallique coudé formant ressort, dont la configuration et la disposition font l'objet d'un second aspect de l'invention. Le fil 40 présente une première région d'extrémité rectiligne 41 qui est guidée dans un alésage 42 d'axe horizontal ménagé dans le corps de chauffe 8, en arrière de la chambre de combustion 17 et au-dessus de l'axe 14. En variante, l'alésage 42 pourrait être remplacé par une encoche débouchant vers l'arrière et/ou vers le bas, le confinement de la région 41 étant complété par le tube 5. La région d'extrémité opposée 43 s'étend sensiblement parallèlement à la région 41, mais est légèrement incurvée de façon à s'engager dans la partie inférieure d'une gorge annulaire 44 ménagée à la périphérie extérieure du tube de mélange 5, en arrière par rapport à l'alésage 42. Les régions 41 et 43 sont reliées par des bras latéraux respectifs 45 et 46 à une région médiane ondulée comportant trois portions en arc de cercle 47, 48 et 49, les arcs 47 et 49 étant raccordés directement aux bras 45 et 46 respectivement et ayant leur convexité tournée vers le bas, et l'arc 48, interposé entre les précédents, ayant sa convexité tournée vers le haut. Une droite horizontale 50, tangente extérieurement aux arcs 47 et 49, définit une ligne d'appui pour le pied sur la surface horizontale de support. À l'état non monté, le pied 40 a une configuration plane, la distance verticale entre les régions d'extrémités 41 et 43 étant légèrement inférieure à la distance entre l'alésage 42 et la partie inférieure de la gorge 44. Pour monter le pied, il est donc nécessaire d'écarter l'une de l'autre les régions 41 et 43 en tendant le ressort, ce qui fait sortir les bras 45 et 46 et la région médiane 47-49 du plan P1 défini par les régions d'extrémités 41 et 43. Le pied peut alors prendre soit une position d'utilisation, en avant du plan P1, représentée en trait plein sur la figure 1, soit une position effacée, en arrière de ce plan, indiquée en trait interrompu. Dans ces deux positions, le pied s'étend sensiblement perpendiculairement à l'axe 14, et forme avec celui-ci un angle aigu de faible ouverture, respectivement. Chacune de ces positions est stable, et on passe de l'une à l'autre en exerçant une poussée vers l'arrière ou vers l'avant jusqu'au franchissement du plan P1.

Selon un troisième aspect de l'invention, l'ouverture 28 pour le passage de la vis de fixation de la queue de panne est allongée dans la direction avant-arrière. On peut ainsi régler l'angle formé par les axes 13 et 14, la stabilité de la fixation de la panne étant assurée par la coopération de la rotule 27 avec l'épaulement circulaire 30. La face extérieure de la paroi supérieure du corps 8, sur laquelle s'appuie la tête de la vis 20, est incurvée autour du centre de courbure de la rotule. Ce réglage permet d'adapter aux besoins de l'utilisateur la position de l'arête de travail de la panne par rapport aux pièces à travailler, indépendamment de l'orientation de la poignée 1. Il s'ajoure au réglage habituel de la position en rotation de la panne autour de son axe 13. La largeur de l'ouverture 28 est quant à elle juste suffisante pour le passage de la tige de la vis, de sorte que l'axe 13 de la queue de panne reste dans le plan P.

On voit également sur les figures 1 et 4 une bougie 51 d'allumage piézo-électrique, connue en elle-même, s'étendant longitudinalement entre le boîtier 3 et le corps 8, au-dessus du tube de mélange 5, et comportant une électrode 52 dont l'extrémité avant est en contact avec le mélange gazeux contenu dans la chambre de combustion 17 du corps de chauffe 8.

## Revendications

1. Fer à souder à combustion de gaz comprenant un corps de chauffe (8), une panne (10) comportant une queue de panne (9) orientée selon un axe (13) à l'intérieur du corps de chauffe (8), et un brûleur (5, 15) entourant ledit axe (13) de manière à produire dans le corps de chauffe (8) une flamme convergeant vers la queue de panne (9), **caractérisé en ce que** le brûleur (5,15) est disposé de manière à former la flamme dans au moins deux zones de l'espace annulaire (17) compris entre la queue de panne (9) et le brûleur (5,15), séparées dans la direction circonférentielle par au moins deux zones sans flamme.

2. Fer à souder selon la revendication 1, dans lequel le brûleur (5,15) est propre à produire une flamme à dards multiples et comprend une grille (15) entourant la queue de panne (9), ladite grille (15) presentant, en regard de chaque zone de flamme, une multiplicité de trous (20) formant chacun un dard, et étant exempte de trous en regard des zones sans flamme.

3. Fer à souder selon la revendication 2, dans lequel le brûleur (5,15) est propre à produire des dards dont le point le plus chaud se situe sensiblement à la surface de la queue de panne (9).

4. Fer à souder selon l'une des revendications précédentes, dans lequel des trajets pour le cheminement de la flamme le long de la queue de panne (9) dans sa direction axiale sont définis par des rainure longitudinales (25) qui sont aménagées dans la queue de panne (9) et réparties sur la périphérie de celle-ci, et/ou par des évidements (17a) du corps de chauffe (8).

5. Fer à souder selon la revendication 4, dans lequel lesdits trajets s'étendent vers le haut et vers le bas à partir d'une portion médiane de la longueur axiale de la queue de panne (9) vers laquelle la flamme converge depuis le brûleur (5,15).

6. Fer à souder selon l'une des revendications 4 et 5, dans lequel lesdites rainures (25) debouchent vers le bas à l'extérieur du corps de chauffe (8) et s'étendent vers le haut jusqu'au sommet de la queue de panne (9).

7. Fer à souder selon l'une des revendications précédentes, dans lequel ledit espace annulaire (17) communique avec l'extérieur du corps de chauffe (8), vers le bas par un intervalle annulaire (31) délimité par la périphérie de la panne (10) et par le bord d'une ouverture inférieure (11) du corps de chauffe (9) traversée par celle-ci, et vers le haut par au moins un passage (32) ménagé sensiblement en regard de l'extrémité supérieure de la queue de panne (9).

8. Fer à souder selon la revendication 7, dans lequel la section dudit espace annulaire (31) perpendiculairement à l'axe (13) est 3 à 4 fois supérieure à la section dudit intervalle annulaire (31) et 2 à 3 fois supérieure à la surface desdits passages (32).

9. Fer à souder selon l'une des revendications 7 et 8, dans lequel ledit bord de l'ouverture inférieure (11) est sensiblement cylindrique et se raccorde à un épaulement interne (30) sur lequel s'appuie la panne (10).

10. Fer à souder selon l'une des revendications précédentes, dans lequel le brûleur (5,15) est disposé autour de la queue de panne (9) symétriquement par rapport à un plan (P) orienté selon la direction longitudinale du fer et contenant ledit axe (13).

11. Fer à souder selon la revendication 10, dans lequel le brûleur (5,15) définit deux zones de flamme symétriques l'une de l'autre par rapport audit plan et séparées l'une de l'autre par deux zones sans flamme disposées respectivement en avant et en arrière de la queue de panne (9).

12. Fer à souder selon la revendication 11, dans lequel deux passages (32) de sortie de flamme sont ménagés à la partie supérieure du corps de chauffe (8), sensiblement en regard des deux zones de flamme respectivement dans la direction axiale de la queue de panne (9).

13. Fer à souder selon l'une des revendications précédentes, comprenant en outre un pied de repos (40) comportant une région médiane (47-49) définissant une ligne d'appui (50) sur une surface de support horizontale, reliée par des bras respectifs (45, 46) à des régions d'extrémités (41, 43) qui sont articulées sur une partie fixe (5, 8) du fer selon des axes respectifs sensiblement parallèles à ladite ligne d'appui (50), lesdites régions d'extrémités étant, à l'état non monté, à une distance mutuelle inférieure à la distance entre lesdits axes d'articulation de telle sorte que le pied peut être amené, par déformation élastique, soit dans une position d'appui, soit dans une position d'effacement, ces deux positions étant situées respectivement de part et d'autre du plan (P1) contenant les deux axes d'articulation.

14. Fer à souder selon la revendication 13, dans lequel le pied de repos (40) est formé par un fil métallique coudé.

15. Fer à souder selon l'une des revendications précédentes, dans lequel la panne (10) peut être montée sur le corps de chauffe (8) dans des positions différant par l'angle entre l'axe (13) de la queue de panne (9) et la direction longitudinale (14) du fer.

16. Fer à souder selon la revendication 15, dans lequel la panne (10) s'appuie par une portion de surface sphérique (27) sur le bord d'une ouverture inférieure (11) du corps de chauffe (8) qu'elle traverse, grâce à une vis de serrage (20) s'étendant selon l'axe (13) de la queue de panne (9) et traversant une ouverture supérieure (28) du corps de chauffe (8).

17. Fer à souder selon la revendication 16, dans lequel ladite ouverture supérieure (28) est d'une largeur juste suffisante pour recevoir la tige de la vis (20) et d'une longueur plus grande dans la direction avant-arrière de manière à permettre un pivotement de l'axe (13) de la queue de panne (9) dans un plan orienté avant-arrière.

18. Fer à souder selon l'une des revendications précédentes, dans lequel la masse de la queue de panne (9) représente moins de 30 % de la masse de la partie active de la panne (10).

## Patentansprüche

1. Gaslötkolben, enthaltend einen Heizkörper (8), eine Lötspitze (10), die einen Lötspitzenschaft (9) aufweist, der in einer Achse (13) im Inneren des Heizkörpers (8) angeordnet ist, und einen Brenner (5, 15), der die Achse (13) so umgibt, daß in dem Heizkörper (8) eine Flamme erzeugt wird, die gegen den Lötspitzenschaft (9) konvergiert, **dadurch gekennzeichnet, daß** der Brenner (5, 15) derart angeordnet ist, daß er die Flamme in wenigstens zwei Zonen des zwischen dem Lötspitzenschaft (9) und dem Brenner (5, 15) befindlichen ringförmigen Zwischenraums (7) ausbildet, die in Umfangsrichtung durch wenigstens zwei Zone ohne Flamme voneinander getrennt sind.

2. Lötkolben nach Anspruch 1, bei dem der Brenner (5, 15) dazu eingerichtet ist, eine Flamme mit vielen Zungen zu bilden, und ein Gitter (15) aufweist, das den Lötspitzenschaft (9) umgibt, wobei das Gitter (15) jeder Flammenzone gegenüberliegend mehrere Löcher (20) aufweist, die jeweils eine Zunge ausbilden, und in den Zonen ohne Flamme frei von Löchern ist.

3. Lötkolben nach Anspruch 2, bei dem der Brenner (5, 15) dazu eingerichtet ist, Flammzungen zu erzeugen, deren heißester Punkt im wesentlichen in der Oberfläche des Lötspitzenschaftes (9) liegt.

4. Lötkolben nach einem der vorhergehenden Ansprüche, bei dem die Bahnen für die Ausrichtung der Flamme längs des Lötspitzenschafts (9) in seiner axialen Richtung durch Längsrillen (25), die in dem Lötspitzenschaft (9) ausgebildet sind und die auf dem Umfang desselben verteilt sind, und/oder durch Ausnehmungen (17a) im Heizkörper (8) bestimmt sind.

5. Lötkolben nach Anspruch 4, bei dem die genannten Bahnen sich nach oben und unten von einem mittleren Abschnitt der axialen Längserstreckung des Lötspitzenschafts (9) erstrecken, auf den die Flamme vom Brenner (5, 15) ausgehend, konvergiert.

6. Lötkolben nach einem der Ansprüche 4 und 5, bei dem die genannten Rillen (25) unten außerhalb des Heizkörpers (8) münden und sich nach oben bis zum Scheitel des Lötspitzenschafts (9) erstrecken.

7. Lötkolben nach einem der vorhergehenden Ansprüche, bei dem der ringförmige Zwischenraum (17) mit dem Äußeren des Heizkörpers (8) unten über einen Ringspalt (31), der vom Umfang der Lötspitze (10) und vom Rand einer von dieser durchquerten unteren Öffnung (11) des Heizkörpers (8) begrenzt ist, und nach oben durch wenigstens einen Kanal (32), der im wesentlichen dem oberen Ende des Heizkörperschaftes (9) gegenüberstehend ausgebildet ist, in Verbindung steht.

8. Lötkolben nach Anspruch 7, bei dem der Querschnitt des Ringspaltes (31) senkrecht zur Achse (13) drei- bis viermal größer als der Querschnitt des ringförmigen Zwischenraums (31) und zwei- bis dreimal größer als der Querschnitt der genannten Kanäle (32) ist.

9. Lötkolben nach einem der Ansprüche 7 und 8, bei dem der genannte Rand der unteren Öffnung (11) im wesentlichen zylindrisch ist und sich an eine innere Schulter (30) anschließt, an der sich die Lötspitze (10) abstützt.

10. Lötkolben nach einem der vorhergehenden Ansprüche, bei dem der Brenner (5, 15) um den Lötspitzenschaft (9) symmetrisch in bezug auf eine Ebene (P) angeordnet ist, die in Längsrichtung des Lötkolbens verläuft und die genannte Achse (13) enthält.

11. Lötkolben nach Anspruch 10, bei dem der Brenner (5, 15) zwei Flammenzonen bestimmt, die zueinander in bezug auf die genannte Ebene symmetrisch sind und voneinander durch zwei Zonen ohne Flamme getrennt sind, die vor und hinter dem Lötspitzenschaft (9) liegen.

12. Lötkolben nach Anspruch 11, bei dem zwei Flammenauslaßkanäle (32) im oberen Teil des Heizkörpers (8) im wesentlichen den zwei Flammenzonen jeweils in axialer Richtung des Lötspitzenschafts (9) gegenüberliegend ausgebildet sind.

13. Lötkolben nach einem der vorhergehenden Ansprüche, enthaltend weiterhin einen Abstellfuß (40), der einen Mittenabschnitt (47-49) aufweist, der eine Auflagelinie (50) auf einer horizontalen Abstützfläche definiert und die jeweils durch Arme (45, 46) mit Endabschnitten (41, 43) verbunden sind, die an einem festen Abschnitt (5, 8) des Lötkolbens jeweils in Achsen angelenkt sind, die im wesentlichen parallel zu der Auflagelinie (50) verlaufen, wobei die genannten Endabschnitte im nicht montierten Zustand einen gegenseitigen Abstand haben, der kleiner als der Abstand zwischen den genannten Anlenkachsen ist, so daß der Fuß durch elastische Verformung entweder in eine Abstell-Stellung oder in eine eingeklappte Stellung gebracht werden kann, wobei diese beiden Stellungen zu beiden Seiten einer Ebene (P1) liegen, die die beiden Gelenkachsen enthält.

14. Lötkolben nach Anspruch 13, bei dem der Abstellfuß (40) von einem gebogenen Metalldraht gebildet ist.

15. Lötkolben nach einem der vorhergehenden Ansprüche, bei dem die Lötspitze (10) an dem Heizkörper (8) in Positionen montierbar ist, die im Winkel zwischen der Achse (13) des Lötspitzenschafts (9) und der Längsrichtung (14) des Lötkolbens differieren.

16. Lötkolben nach Anspruch 15, bei dem die Lötspitze (10) sich durch einen sphärischen Oberflächenabschnitt (27) am Rand einer von ihr durchdrungenen unteren Öffnung (11) des Heizkörpers (8) dank einer Spannschraube (20) abstützt, die sich in der Achse (13) der Lötspitze (9) erstreckt und eine obere Öffnung (28) des Heizkörpers (8) durchdringt.

17. Lötkolben nach Anspruch 16, bei dem die genannte obere Öffnung (28) eine Größe hat, die gerade ausreichend ist, um den Schaft der Schraube (20) aufzunehmen, und in Richtung von vorn nach hinten eine größere Länge hat, um eine Verschwenkung der Achse (13) des Lötspitzenschafts (9) in einer von vorn nach hinten verlaufenden Ebene zu ermöglichen.

18. Lötkolben nach einem der vorhergehenden Ansprüche, bei dem die Masse des Lötspitzenschafts (9) weniger als 30% der Masse des aktiven Teils der Lötspitze (10) ausmacht.

## Claims

1. Soldering iron with gas combustion comprising a heating element (8), a bit (10) comprising a bit end (9) oriented along an axis (13) inside the heating element (8), and a burner (5, 15) surrounding the axis (13) so as to produce in the heating body (8) a flame that converges towards the bit end (9), **characterised in that** the burner (5, 15) is disposed so as to shape the flame in at least two zones of the annular space (17) between the bit end (9) and the burner (5, 15), which are separated in the circumferential direction by at least two flameless zones.

2. Soldering iron according to claim 1, wherein the burner (5, 15) is capable of producing a multiple-jet flame and comprises a grid (15) surrounding the bit end (9), the grid (15) having, opposite each flame zone, a plurality of holes (20) each forming a jet, and having no holes opposite the flameless zones.

3. Soldering iron according to claim 2, wherein the burner (5, 15) is capable of producing jets whose hottest point is located substantially at the surface of the bit end (9).

4. Soldering iron according to one of the preceding claims, wherein trajectories for tracking the flame along the bit end (9) in its axial direction are defined by longitudinal grooves, which are formed in the bit end (9) and distributed around the periphery thereof, and/or by recesses (17a) in the heating element (8).

5. Soldering iron according to claim 4, wherein the trajectories extend towards the top and bottom starting from a median portion of the axial length of the bit end (9) towards which the flame converges from the burner (5, 15).

6. Soldering iron according to either of claims 4 or 5, wherein the grooves (25) open out at the bottom on the outside of the heating element (8) and extend upwards as far as the tip of the bit end (9).

7. Soldering iron according to one of the preceding claims, wherein the annular space (17) communicates with the outside of the heating element (8), at the bottom by an annular gap (31) defined by the periphery of the bit (10) and by the edge of a lower aperture (11) in the heating element (8) traversed by the said bit, and at the top by at least one passage (32) formed substantially opposite the upper end of the bit end (9).

8. Soldering iron according to claim 7, wherein the section of the annular space (31) perpendicular to the axis (13) is 3 to 4 times larger than the section of the annular gap (31) and 2 to 3 times larger than the surface of the passages (32).

9. Soldering iron according to either of claims 7 or 8, wherein the edge of the lower aperture (11) is substantially cylindrical and joins up with an inner shoulder (30) on which the bit (10) bears.

10. Soldering iron according to one of the preceding claims, wherein the burner (5, 15) is disposed about the bit end (9), symmetrically relative to a plane (P) oriented in the longitudinal direction of the soldering iron and containing the axis (13).

11. Soldering iron according to claim 10, wherein the burner (5, 15) defines two flame zones which are mutually symmetrical relative to the said plane and are separated from one another by two flameless zones disposed respectively in front of and behind the bit end (9).

12. Soldering iron according to claim 11, wherein two flame outlet passages (32) are housed in the upper part of the heating element (8), substantially opposite the two flame zones respectively in the axial direction of the bit end (9).

13. Soldering iron according to one of the preceding claims, further comprising a rest stand (40) comprising a median region (47-49) defining a line of support (50) on a horizontal support face, connected by respective arms (45, 46) to end regions (41, 43) which are hinged on a fixed part (5, 8) of the soldering iron according to respective axes that are substantially parallel to the support line (50), the end regions being, in the disassembled state, at a mutual distance which is less than the distance between the hinge axes, such that the stand can be brought by resilient deformation either into a support position or into a retracted position, these two positions being located respectively on either side of the plane (P1) containing the two hinge axes.

14. Soldering iron according to claim 13, wherein the rest stand (40) is formed by a bent metal wire.

15. Soldering iron according to one of the preceding claims, wherein the bit (10) can be mounted on the heating element (8) in positions that differ by the angle between the axis (13) of the bit end (9) and the longitudinal direction (14) of the iron.

16. Soldering iron according to claim 15, wherein the bit (10) bears with a portion having a spherical face (27) on the edge of a lower aperture (11) of the heating element (8) which it crosses, by means of a locking screw (20) extending along the axis (13) of the bit end (9) and crossing an upper aperture (28) of the heating element (8).

17. Soldering iron according to claim 16, wherein the upper aperture (28) has a width just sufficient to receive the shank of the screw (20) and a length that is larger in the front-to-back direction, so as to permit pivoting of the axis (13) of the bit end (9) in a plane oriented from front to back.

18. Soldering iron according to one of the preceding claims, wherein the mass of the bit end (9) represents less than 30% of the mass of the active part of the bit (10).
